# NEW EUROPEAN PATENT SPECIFICATION

(11) **EP 2 197 675 B2**
(45) Date of publication and mention of the opposition decision: **08.04.2020**
(45) Mention of the grant of the patent: 05.10.2016
(21) Application number: 08828926.9
(22) Date of filing: 15.08.2008
(51) Int. Cl.: B32B 37/00, C09D 4/06, C09D 133/00

(54) **LOW BLUSH GELCOATS HAVING HIGH COLOR FASTNESS**
GELBESCHICHTUNGEN MIT GERINGER VERFÄRBUNG UND HOHER FARBSCHNELLIGKEIT
ENDUITS GÉLIFIÉS DE FAIBLE OPALESCENCE AYANT UNE SOLIDITÉ DE LA COULEUR ÉLEVÉE

(30) Priority: 30.08.2007 US 966802 P
(43) Date of publication of application: 23.06.2010
(73) Proprietor: Ashland Licensing and Intellectual Property LLC, Dublin, OH 43017 (US)
(72) Inventor: SUMNER, Michael, J., Dublin, OH 43017 (US); FISHER, Charles, L., Ostrander, OH 43061 (US); RIGHETTINI, Robin, F., Dublin, OH 43017 (US)
(74) Representative: Bülle, Jan
(86) International application number: PCT/US2008/009764
(87) International publication number: WO 2009/032056

(56) References cited:
- EP-A1- 0 854 157
- WO-A1-00/23495
- WO-A1-00/46297
- WO-A1-98/20052
- WO-A1-03/070834
- WO-A1-2006/091446
- WO-A2-03/101918
- WO-A2-2004/013236
- WO-A2-2006/130193
- CA-A1- 2 179 243
- JP-A- 3 070 719
- US-A- 4 742 121
- US-A- 5 891 942
- US-A1- 2005 048 214
- US-A1- 2005 159 551
- US-A1- 2007 001 343
- US-B1- 6 200 686
- US-B1- 6 617 417
- US-B2- 6 808 821
- G153-04 Standard Practice for Operating Enclosed Carbon Arc Light Apparatus for Exposure of Nonmetallic Materials Published December 2010, 1 January 2010 (2010-01-01), pages 1-8,
- "Processing Methods" In: George Lubin: "Handbook of Composites", 1 January 1982 (1982-01-01) pages 344-346,
- "Synthetic Silicas" In: H.S. Katz: "Handbook of Fillers for Plastics", 1987, Milewski page 179,
- Eisenberg, P. et al: "Unsaturated Polyesters: Influence of the Molar Mass on the Cure with Styrene and the Properties of the Resulting Networks", J Appl. Polym. Sci., vol. 65, 1997, pages 755-760,
- Parker, E. E.: Ind. Eng. Chem., vol. 58, no. 4, 1966, pages 53-58,
- G151-00 Standard Practice for Exposing Nonmetallic Materials in Accelerated Test Devices that Use Laboratory Light Sources, June 2000 (2000-06), pages 1-11,

## Description

### BACKGROUND OF THE INVENTION

### Field of the Invention

The invention concerns gelcoat compositions according to claims 1 to 8 comprising a base resin which is an unsaturated polyester, a reactive diluent component comprising styrene and one or more alternative diluents, a pigment and inorganic extended fillers. The gel coat compositions may further comprise promoters, accelerators, thixotropic agents, promoters, inhibitors, air release agents, flow and leveling agents, dispersing aids. The gelcoat composition is particularly useful in the manufacture of marine equipment, such as pleasure watercraft, like boats, yachts, jet skis and other personal watercraft.

### Background of the Invention

In the composites industry, fiber-reinforced components or parts are often coated or "gelcoated" to improve the overall quality of the part. The fiber-reinforced components are manufactured by initially coating the interior of a mold, which is the negative image or shape of the final part, using a gelcoat. The gelcoat is applied in a relatively thick layer of from 10 to 40 thousandths of an inch, typically using spray gun technology. In some instances, it is applied using brushing or hand lay-up.

After the gelcoat is allowed to solidify or cure, it is reinforced using a fiber-reinforced laminating resin that is applied using various techniques (brushing, spraying, hand lay-up). The laminating resin is allowed to cure and the final part is removed from the mold. As the laminating resin is curing, the resin will shrink around the fibers and a fiber pattern will appear. The appearance of the fiber pattern is often referred to as "print-through".

In the composite manufacturing process, the gelcoat is applied in part to hide the print-through, which allows the final part to have a high quality surface appearance. In addition, a gelcoat can provide a high quality cosmetic appearance. The gelcoat also serves as a barrier against water, wear, and weathering.

In the marine manufacturing industry, pigmented gelcoat is used heavily in the manufacture of various types of composite pleasure craft, examples of which include speed boats and yachts. Currently, consumers are demanding composite boats with color composite parts having greater color and gloss retention or fastness over time. Conventional gelcoats pigmented to other colors, especially dark colors, were not traditionally used below the water line because the pigmented gelcoat would become lighter in color or "blush" due to exposure to the marine environment. Thus, historically, white pigmented gelcoats have been predominately used for composite boat applications, especially below the water line. The boat manufacturing industry is responding to consumer demand by placing higher performance requirements on gelcoat in terms of gloss retention and color fastness as a function of exposure time to the marine/aquatic environment. White gelcoats do not tend to color change due to blushing, however white material, particularly in a marine environment, suffers from gloss loss and yellowing due to environmental exposure. Thus, non-pigmented, or white, gelcoats that do not experience gloss loss and yellowing are also desired by the boat manufacturing industry.

Gelcoat is mainly made from an unsaturated polyester base resin, promoters, accelerators, inorganic extender fillers, reactive diluents such as styrene, and pigments. It is said in U.S. Published Application 2007/0001343 that drastically reducing the inorganic extender filler level to about 2 wt% or less can reduce "blushing". However, reducing the filler level in a gelcoat causes problems in processing and application. Two problems typically associated with gelcoats containing low amounts of filler are sagging and porosity. Sagging occurs when a gelcoat is sprayed onto the vertical surface of a mold and, due to gravity, the gelcoat begins to slowly sag. This negatively impacts final part quality and is unacceptable to the boat manufacturer. Porosity is the result of air voids being trapped permanently in the gelcoat during the cure cycle. Boat manufacturers often have to repair hulls of boats because of damage suffered at the manufacturing facility or in the field. Therefore, being able to repair a boat is critical to the boat manufacturer. Repairing involves sanding, patching, and buffing the damaged area of the hull. Voids trapped beneath the surface of the gelcoat make the repair process very difficult and is unacceptable to boat manufacturers.

JP 3 0707019 A, US 6 617 417 B, US 2005/159551 A, US 5891942 A and US 2005/048214 A also describe gel coats based on a base resin styrene and a range of different reactive diluents.

Porosity in gelcoats comprising a relatively low amount of fill can typically be eliminated by including materials that increase the level of hazardous air pollutants ("HAPS") in the formulation, such as styrene and methylmethacrylate. However, the increase in HAPS will render the gelcoat not compliant with United States federal government Maximum Achievable Control Technology ("MACT") standards, and similar standards and procedures in other countries, which is often deemed unacceptable by boat manufacturers.

All parts and percentages set forth in this specification and the claims are on a weight-by-weight basis unless otherwise specified.

### SUMMARY OF THE INVENTION

The invention provides for the use of alternative monomers, i.e. alternative reactive diluents according to claim 1, in gelcoat compositions with a commensurate reduction of styrene and the use of relatively larger amounts of filler, such as more filler than that allowed for in U.S. Published Application 2007/0001343. The gelcoat compositions are either white or pigmented and are MACT compliant, with excellent color fastness and decreased sagging and porosity. In aspects of the invention, sagging and porosity is eliminated.

The gel coat composition comprises a reactive diluent comprising styrene and one or more alternative diluents.

### DETAILED DESCRIPTION OF THE DRAWINGS

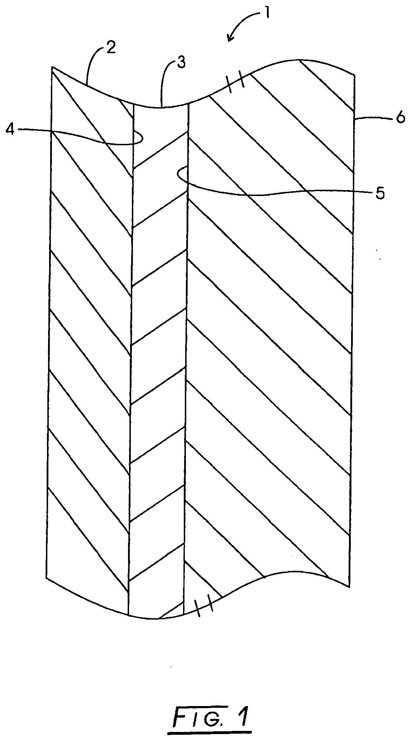

FIG.1 is a cross-sectional view of a laminated reinforced compound compromising the gelcoat composition in accordance with an embodiment of the invention.

### DETAILED DESCRIPTION OF THE INVENTION

The gelcoat compositions comprise a base resin which is an unsaturated polyester resin, reactive diluent comprising styrene and one or more alternative diluents, pigment and inorganic extended fillers and may further comprise one or more of promoters, accelerators, thixotropic agents, inhibitors, air release agents, flow and leveling agents and dispersing aids. Typically, The gelcoat compositions may comprise 40% to 80%, preferably from about 50% to 70%, base resin; 10% to 45% reactive diluents; up to 20%. such as 1% to 20%, pigment and more than 2% inorganic extended fillers. The gel coat composition may further comprise up to about 1%, preferably from 0.1% to 1%, promoters; up to 1%, preferably from 0.1% to 1%, accelerators; up to 1%, preferably from 0.1% to 1%, thixotropic agents; up to 1%, preferably from 0.1% to 1%, inhibitors; up to 1%, preferably from 0.1% to 1%, air release agents, up to 1%, preferably from 0.1% to 1%, flow and leveling agents and up to 1%, preferably from 0.1% to about 1%, dispersing aids The gelcoat compositions can be applied in methods for making composite materials, such as boat hulls and other parts for marine equipment, typically parts that will be partially or completely submerged in water.

The base resins useful in the invention include unsaturated polyester resin. The polyester resins used herein can be prepared from the condensation of one or more carboxylic acids, such as mono-, di-, or polyfunctional unsaturated or saturated carboxylic acids or their corresponding anhydrides, and one or more mono-, di-, or other polyfunctional alcohols. Representative unsaturated carboxylic acids and their corresponding anhydrides include maleic acid, fumaric acid, chloromaleic acid, itaconic acid, citraconic acid, methylene glutaric acid, mesaconic acid, acrylic acid, methacrylic acid, and mixtures thereof. Representative saturated carboxylic acids and their corresponding anhydrides include succinic acid, glutaric acid, d-methyl glutaric acid, adipic acid, sebacic acid, pimelic acid, phthalic anhydride, o-phthalic anhydride, isophthalic acid, terephthalic acid, and mixtures thereof.

Representative alcohols for use in making the unsaturated polyester resins include alkanediols and oxa-alkanediols such as ethylene glycol, 1,2-propylene glycol, propane-3-diol, 1,3-butylene glycol, butene-1,4-diol, hexane-1,6-diol, diethylene glycol, triethylene glycol, polyethylene glycol, cyclohexane-1,2-diol, 5-norbornene-2,2-dimethylol, 2,3-norbornene diol, cyclohexane dimethanol,1,2-propanediol, 2-methy 1-,3-propanediol, pentaerythritol and mixtures thereof. Representative monofunctional alcohols that can be used in limited amounts, such as 0.5% to 10%, include benzyl alcohol, cyclohexanol, 2-ethyhexyl alcohol, 2-cyclohexyl ethanol, lauryl alcohol and mixtures thereof.

The base resins used in the gelcoat compositions can be prepared by techniques familiar to those skilled in the art. For example the unsaturated polyester resins useful in the gelcoat compositions described herein can be prepared by common esterification techniques where the carboxylic acid or corresponding anhydride is reacted with a polyol, usually in the presence of a catalyst to a predetermined acid number.

In making the gelcoat compositions, the base resin is typically diluted in the reactive diluent. In making conventional gelcoat compositions styrene is the monomer used as the diluent. Styrene, however, is a hazardous air pollutant (HAPS) and reduction of elimination of styrene is desired. Thus, in the invention alternative reactive diluents are used to replace some of the styrene in the reactive diluent component of the composition, processes and methods of the invention.

The alternative reactive diluents used in this invention are linear or branched acrylics selected from the group consisting of butyl methacrylate, butyl acrylate, hexyl acrylate, 2-ethylhexyl acrylate, lauryl acrylate, 1,4-butanediol diacrylate and dimethacrylate, 1,6-hexanediol diacrylate and dimethacrylate, 1,12-dodecanediol dimethacrylate, 2-ethylhexyl methacrylate, hexyl methacrylate, lauryl methacrylate, polyethylene glycol diacrylate, polyethylene glycol dimethacrylate, polypropylene glycol diacrylate, polypropylene glycol dimethacrylate and combinations thereof.

The ability to replace some of the styrene is a function of the nature of the base resin. With the gel coat compositions comprising the base resins described herein some of styrene conventionally used for making gelcoat compositions can be replaced with other types of reactive diluents. For example formulations using unsaturated polyester resins as the base resin, the replacement diluent level used in lieu of styrene is limited to about 20%. For gelcoats used in marine/aquatic environments, the styrene level of pigmented gelcoats is preferably limited to about 40 wt% styrene or less due to emission regulations. Thus, the invention compromises an improved method for making a gel coat composition wherein the improvement compromises replacing some of styrene in a reactive diluent component with one or more alternative reactive diluents. The method compromises the steps of combining a base resin, such as about 40% to about 80%, preferably about 50% to about 70 % base resin, with a reactive diluent component having one or more reactive diluents discussed herein. In addition to the base resin and reactive diluents, other materials may be added such as inorganic extended fillers, other fillers, pigments, and other materials as described herein. The method comprises inclusion of more than about 2%, such as more than about 3% percent or about 4%, like at least about 5%, typically at least about 7%, and preferably about 5% to about 40%, most preferably about 10% to about 30% or about 5% to about 20% inorganic extended filler. The components of the gelcoat composition may be blended by processes that should be familiar to one skilled in the art.

The overall composition may comprise styrene because the base resin may comprise styrene. For example, UPR base resin comprises styrene, as much as up to about 29% styrene.

Inorganic extender fillers used in the gelcoat compositions (formulations), methods and processes described herein, include chopped or milled fiberglass, talc, silicon dioxide, titanium dioxide, wollastonite, mica, alumina trihydrate, clay, calcium carbonate, magnesium carbonate and calcium carbonate, and combinations thereof. The fillers can be used as is or be modified through surface treatment, an example of which is talc that has been surface treated to have vinyl groups. The filler is present in amounts of more than about 2%, such as more than about 3% or about 4%, like at least about 5%, typically at least about 7%, and preferably about 10% to about 45%, most preferably about 10% to about 30% or about 5% to about 20%, based on the total weight of the gelcoat formulation.

Pigments used in the gelcoat compositions, methods, and processes impart color and opacity to the gelcoat composition. Examples of pigments include treated or untreated organic or inorganic pigments and mixtures thereof, such as titanium dioxide, carbon black, iron oxide black, phthalo blue, phthalo green, quinacridone magenta, LF orange, arylide red, quinacridone red, red oxide and other pigments familiar to those skilled in the art. Pigments are used in an amount sufficient to provide an opaque cured coating composition at the desired thickness level. Combinations of pigments may be used.

Promoters used in the gelcoat compositions, methods and processes of the invention are generally any electron donating species that facilitates in the decomposition of an initiator and may also help in decomposition of any catalyst. An accelerator when used in the gelcoat compositions may also have the same function. Suitable promoters include metal compounds, for example cobalt, manganese, potassium, iron, vanadium, copper and aluminum salts of organic acids; amines, for example dimethylaniline, diethylaniline, phenyl diethanolamine, dimethyl paratoluidine, 2-aminopyridine; amides, for example dimethyl acetoamide, diethyl acetoamide; Lewis acids, for example boron fluoride dehydrate, ferric chloride; bases, for example tetramethyl ammonium hydroxide; quaternary ammonium salts for example trimethyl benzyl ammonium chloride, tetrakismethylol phosphonium chloride; sulfur compounds, for example dodecyl mercaptan, 2- mercaptoethanol; dimethyl acetoacetamide; ethyl acetoacetate; and methyl acetoacetate. Combinations of promoters and accelerators may be used.

Thixotropic agents useful in the gelcoat compositions, methods, and processes include silica compounds and/or inorganic clays. For example, the silica compounds may be selected from the group consisting of fumed silica, hydrophilic fumed silica, hydrophobic fumed silica, precipitated silica and combinations thereof. Useful inorganic clays include bentonite clay, garamite clay, hectorite clay and the combinations thereof.

Inhibitors, such as, free-radical inhibitors/scavengers may be included in the gelcoat compositions and applied in the methods and processes described herein. The inhibitors may maintain an acceptable shelf life for the composition. Examples of suitable inhibitors include quinones, for example hydroquinone, toluhydroquinone, mono-tertiary-butyl hydroquinone, di tertiary-butyl hydroquinone, napthaquinone, monomethyl ether hydroquinone; butylated hydroxy toluene and tertiary butyl catechol. Combinations of inhibitors may be used.

Air release agents, also known as defoamers, will enhance the ability of the gelcoat composition to be free of trapped air, i.e. porosity. These agents may be silicone based or non-silicone based and includes acrylic polymer, hydrophobic solids, mineral oils. Air release agents available from BYK Chemie, GmbH, Wesel, Germany ("BYK Chemie") under the designations BYK-066, BYK-077, BYK-500, BYK-501, BYK-515, and BYK-555 may be used. Combinations of air release agents may be used.

Flow and leveling agents decrease the surface tension at the surface of the cured gelcoat. Surfactants, such as silicone surfactants and/or fluorocarbon surfactants are typically used in the gelcoat compositions, methods and processes described herein. Silicone surfactants that may be used in the invention include dimethyl silicones, liquid condensation products of dimethylsilane diol, methyl hydrogen polysiloxanes, liquid condensation products of methyl hydrogen silane diols, dimethysilicones, aminopropyltriethoxysilane, methyl hydrogen polysiloxanes and combinations thereof. Suitable fluorocarbon surfactants include fluorinated potassium alkyl carboxylates, fluorinated alkyl quaternary ammonium iodides, ammonium perfluoroalkyl carboxylates, fluorinated alkyl polyoxyethylene ethanol, fluorinated alkyl alkoxylates, fluorinated alkyl esters, ammonium perfluoroalkyl sulfonate and the like and combinations thereof.

Dispersing aids prevent the sedimentation of mineral fillers, such as talc, aluminum trihydrate, and the flocculation of organic and inorganic pigments. Typical dispersing aids useful in the invention are surfactant polymers, for example polyester and polysiloxane copolymers, alkylol ammonium salts, and salts of unsaturated polyamine amides and acidic polyesters and the like and combinations thereof. Dispersing aids available from BYK Chemie under the designation BYK-940 may be used.

Other components commonly used and known in the art can optionally be present in the invention. These components include but are not limited to biocides, suppressants to reduce VOC emissions and catalysts. Catalysts may include materials that are inert in the gelcoat composition but become active during the application process, such as radiation-activated initiators and heat activated catalysts. Alternatively, catalysts, such as free radical catalysts like peroxide catalysts or azoalkane-type catalysts, may be used with the gelcoat compositions at the time of application.

The gelcoats can be prepared according to claim 9 by any known means for example by blending the base resin with the remaining ingredients in any convenient order and such blending preparation may be applied in the improved methods and processes discussed herein. The gelcoat compositions described herein can be used to provide blush free parts for marine/aquatic applications.

The gelcoat compositions described herein are used in conjunction with structural materials, such as fiber glass and laminating resin to make fiber reinforced components or parts, for use in making items. One item particularly suitable for the gelcoat compositions is fiber reinforced components for watercraft, such as yachts, boats, jet skis, particularly hulls or other parts of watercraft that are fully or partially submerged in water. Other items which may comprise fiber reinforced components comprising the gelcoat compositions described herein include recreational vehicles, trailers, and outdoor signage.

Methods for making watercraft according to claims 10 to 12 with the gelcoats of the invention will generally compromise the steps of applying the gelcoat compositions described herein to an inner surface of a watercraft mold, at least partially curing the gelcoat composition, applying reinforcing material and laminating resin to the gelcoat composition within the mold to form a plastic support adjacent to the gelcoat and curing the plastic support within the mold to form a laminated fiber reinforced component comprising a fully cured gelcoat and a plastic support and demolding the laminated reinforced component. The laminated reinforced component 1 within the mold 2 is shown in Fig. 1 comprising the gelcoat composition 3 having a first side 4 adjacent to the mold 2 and a second side 5 having adjacent thereto the plastic support 6. In embodiments of the invention, the gelcoat composition is fully cured before the reinforcing material and laminating resin are applied.

The gel coat compositions comprising colored pigment (i.e. colored gel coats as opposed to white gel coats) of the invention will have lower blush values than corresponding gel coats that do not compromise the alternative reactive diluents as described herein. For example, the colored gel coat compositions will have a blush (DE) after being submerged in water of about 65° for about 6 hours then remaining in the water for about 14 hours as the water cools to room temperature of less than about 2.20, such as less than about 1.5 and typically less than about 0.95. For example, the colored gel coat compositions may have a blush of about 0.1 to about 2, such as about 0.5 to about 1.5, including ranges of about 0.10 to about 0.90, about 0.10 to about 0.65, and about 0.20 to about 0.50 after being submerged in water of about 65° for about 6 hours then remaining in the water for about 14 hours as the water cools to room temperature. White gel coats in accordance with the invention will have yellowing (Db) of less than 3.15, such as about 1.0 to about 3.0 or about 2.0, typically about 1.2 to about 1.5, measured after being subjected to about 2,500 hours of QUV accelerated weathering performed in accordance with ASTM standard G153.

In addition, incorporation of the alternative reactive monomers reduces the HAPS level of the gel coat composition to less than about 30%. For example, the HAPS level of colored gel coat composition may be less than about 28%, such as about 10% to about 25% and typically about 15% to about 20%. With the white gelcoats, the HAPS levels are decreased to less than 30%, such as less than about 25%, for example, from about 15% to about 25%.

### EXAMPLES

In the following examples, the gel coat composition comprises a reactive diluent component which comprises and/or contains one or more alternative reactive diluent monomers and/or styrene (which may form part of the reactive diluent component). The invention requires less styrene in the reactive diluent component than if the styrene is the only reactive monomer. Thus, the alternative reactive diluent monomer(s) substitute all or part of the amount of styrene that would be necessary in the reactive diluent component if the only monomer used as a reactive monomer is styrene.

### Example 1

Gelcoat compositions, having the compositions set forth in Table 1 were prepared for this example. All amounts in Table 1 are in weight percent based on the total weight of the gelcoat composition, except where noted.

The alternative reactive diluent monomers used in the gelcoat compositions in place of the styrene as reactive diluent in this example are methymethacrylate, 1,6-hexanediol diacrylate, 1,6-hexanediol dimethacrylate, n-butylmethacrylate, n-butyl acrylate, cyclohexylmethacrylate, 2-ethylhexylmethacrylate, tetrahydrofurfuryl-methacrylate, isobornyl acrylate, and isobornyl methacrylate. In the set of experiments, E1 is a control with only styrene used as a reactive diluent and all other formulations are experimental. Examples E2, E7, E9 E10 and E11 are comparative formulations. E3,E4,E5,E6 and E8 are examples according to the invention.

Each formulation contains 64 wt% of an end-capped unsaturated polyester resin (S876) diluted in about 30 wt% styrene, that is the base resin comprises 30% styrene. The unsaturated polyester resin is derived from neopentyl glycol, 2-butyl-2-ethyl-1,3-propanediol, propylene glycol, isophthalic acid, and maleic anhydride. Also, each gelcoat formulation contains 1.80 wt% fumed silica, 16.7 wt% aluminum trihydrate (ATH) and 10 wt% of LP6303 which is a dark phthalo blue pigment with a low molecular weight unsaturated polyester resin grinding vehicle. The grinding vehicle is based upon dipropylene glycol and maleic anhydride.

The gelcoat formulations were prepared by, first, mixing, with a high speed mixer equipped with a cowles blade the base resin, first reactive diluent charge, inhibitor solution, and dispersing aid. After thorough mixing, the fillers were added and the high speed mixing continued until a temperature between (100 °F) 38 °C and (120°F) 49 °C was reached. The dispersion of the fillers was checked using a Hegman grind bar which provides a measurement of the largest filler particle size. When the largest filler particle size was determined to be below about 50 microns, the remaining components of the formulations were added and mixed according to the formulation order. When building a gelcoat batch, a critical step is dispersing the fillers. If the viscosity of the media used to disperse the fillers is not correct the fillers will not disperse well. In the examples, the reactive diluent charge is split with some of the reactive diluent being added to the base resin. If some of the reactive diluent is not added to the base resin, when the fillers are being dispersed the viscosity will become too high to mix. If all of the reactive diluent is added to the base resin before dispersing the fillers, the viscosity will be too low and the fillers will not disperse well. Splitting the reactive diluent charge as shown in Table I below is a common practice in the manufacture of gelcoat formulations.

All of the gelcoat formulations were sprayed onto a glass plate at a thickness of about 20 thousandths of an inch (2,54 cm) and allowed to cure. After curing, the gelcoat was reinforced with 3 plies of chopped glass fiber and a commercially available resin, AROPOL™ 8028, from Ashland Inc., Dublin, Ohio. The unsaturated oligomer in this resin, which is diluted with styrene at about 33 wt%, is primarily comprised of dicylopentadiene, maleic anhydride, ethylene glycol, and diethylene glycol. The laminating resin was allowed to cure at room temperature.

After curing, the gelcoated composite, while still attached to the glass, was placed in an oven and post-cured for 4 hrs at 71° C. After post-curing, the composite panel was allowed to cool to room temperature and removed from the glass plate. The gelcoat was a dark blue color.

The panel was cut into two (2" X 2") 5.08 X 5.08 cm squares and initial color readings were taken using a color spectrophotometer. The samples were submerged into a 65° C water bath for 6 hrs and, with the samples still submerged in it, the water bath was allowed to cool to room temperature over approximately 14 hours. Next, the samples were removed from the room temperature bath and patted dry with a towel. After sitting for 4 hrs at room temperature, two experiments were conducted on the samples as noted in Table 1 to ascertain the difference in color change (L, a, b) or blush is reported as DE. The larger the DE value the more the sample has lightened in color or blushed. In the first set of experiments all of the alternative reactive diluent monomers, with a linear alkyl or a branched alkyl chain, reduced blushing by about 20% or greater with alternative reactive diluent monomers such as 1,6-hexanediol diacrylate, 1,6-hexanediol dimethacrylate and n-butyl methacrylate having the greatest positive impact on blush. The same general trend that the alternative reactive diluents reduce color change due to blushing is shown in the second set of experiments although the blush values over all in the control (E1) and the other formulations are higher than in the first set of experiments and the data in the second set of experiments shows anomalies for certain alternative reactive diluents when compared to the first set of experiments.

The formulations containing the alternative reactive diluent monomers were sprayed on a glass panel to 40 thousandths of an inch in thickness and checked for porosity and resistance to sag. It was observed that the cured films did not sag and after sanding into the films for 120 seconds no porosity was observed.

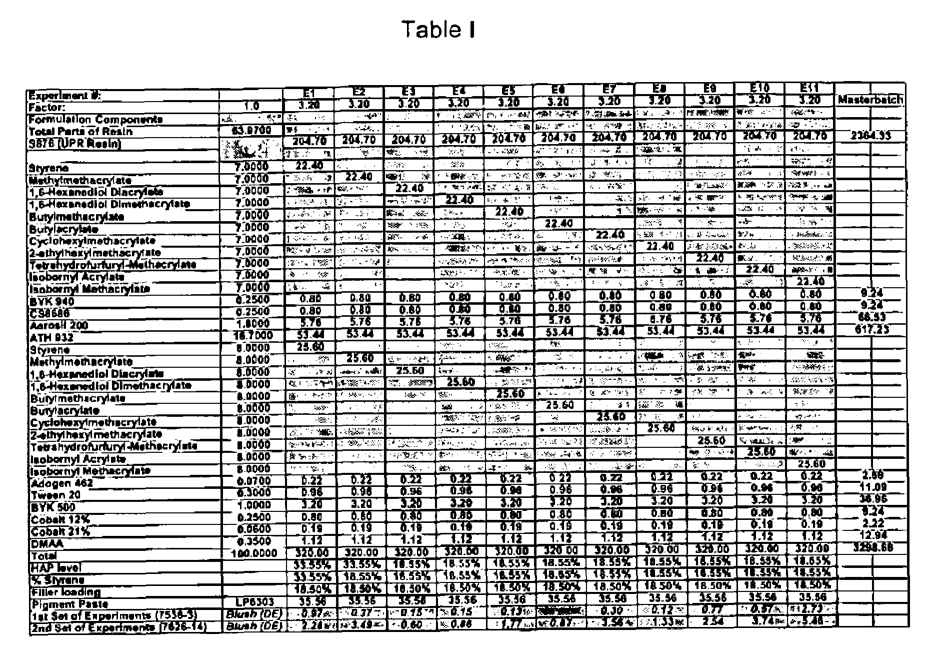

In the table above the total styrene level was calculated based on the amount of styrene in the base resin, which in this case was about 29 wt%, plus any additional styrene that was added. For example, total styrene level in E1 = (63.97*0.29 + 7+8)/100 = 0.3355 = 33.55%.

### Example 2

Gelcoat compositions compromising reactive diluent monomers, as set forth in Table II were prepared for this example. All amounts in Table II are in weight percent based on the total weight of the gelcoat composition, except where noted.

The alternative reactive diluent monomer used in the gelcoat compositions in place of the styrene in this example is 1,6-hexanediol diacrylate (HDDA). Formulations E1 and E2 contain about 64 wt% of the same unsaturated polyester resin (S876) used in Example 1, and formulation E3 contains about 59 wt%. E1 is a control having only styrene as the reactive diluent and E2 and E3 are experimental using the 1,6-hexanediol diacrylate (HDDA). Also, each gelcoat formulation contains 1.80 wt% fumed silica, 16.7 wt% aluminum trihydrate (ATH), and 10 wt% of LP6303 which is a dark phthalo blue pigment with a low molecular weight unsaturated polyester resin grinding vehicle.

The gelcoat formulations and cured test panels were prepared as set forth in Example 1. Also, blush testing was completed using the same procedure as applied in Example 1. The data in Table II demonstrates that increasing the level of HDDA from 5 to 20 wt% reduces blush by greater than 50%.

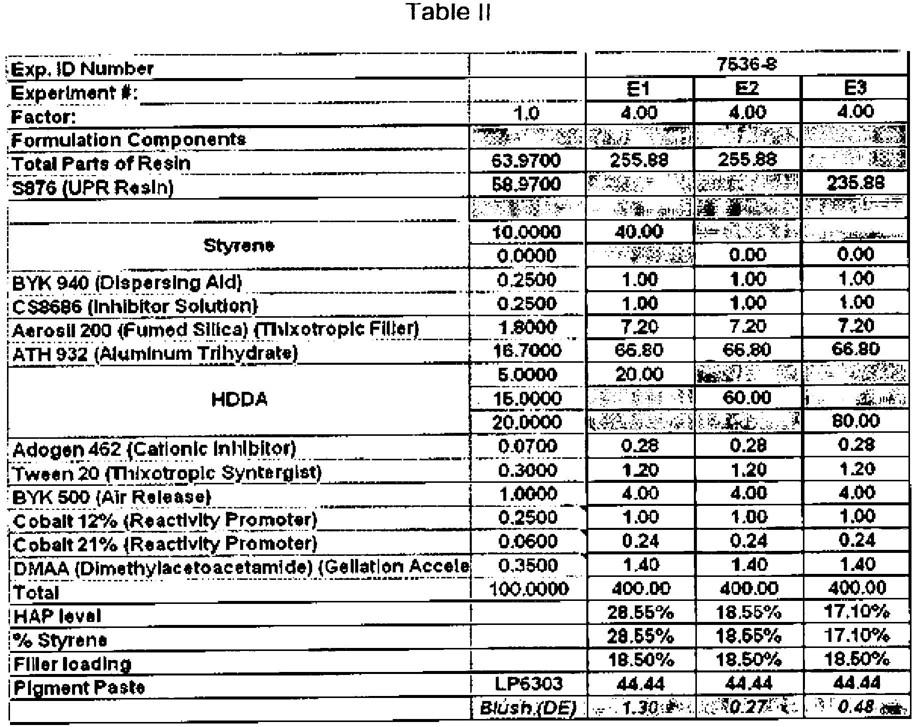

White gelcoat compositions compromising alternative reactive diluent monomers, as set for in Table III, were prepared in this example. All amounts in Table III are in weight percent based on the total weight of the gelcoat composition, except where noted.

The alternative reactive monomers used in the gelcoat formulations in place of the styrene in this example are 1,6-hexanediol diacrylate (HDDA) and n-butylmethacrylate (n-BMA). In the set of experiments, E1 is a control with only styrene used as a reactive diluent and all other formulations (E2 and E3) are experimental. Each formulation contains 51.2 wt% of an end-capped unsaturated polyester resin (S570) diluted in about 30 wt% styrene. The unsaturated polyester resin is derived from neopentyl glycol, 2-butyl-2-ethyl-1,3-propanediol, propylene glycol, isophthalic acid, and maleic anhydride. Also, each gelcoat formulation contains 1.5 wt% fumed silica, 18.0 wt% titanium dioxide, 6.0 wt% aluminum trihydrate, and 6.0 wt% talc.

The gelcoat formulations in Table III were prepared using the same procedure as set forth in Example 1. Also, gelcoated panels were prepared and post-cured for testing using the laminating procedure applied in Example 1.

After removing from the glass plate, two (3" X 6") 7.62 X 15.24 cm samples were cut from each panel. Initial color and gloss measurements were taken using a color spectrophotometer and a gloss meter, respectively. The samples were then placed in a Q-Lab QUV accelerated tester and tested according to the ASTM G153 procedure. The samples were removed from the QUV tester every 500 hrs to measure percent gloss retention and color change. The color change is measured in terms of L, a, b, c, and E. White gelcoats most often experience yellowing color change in the marine environment. Therefore, the greatest emphasis is placed on measuring the Db (yellowing) when conducting weathering testing. As the Db value increases, this indicates an increase in yellowing.

The formulations containing the two alternative monomers (E2 and E3) improved the gloss retention and yellowing (Db) relative to the control sample (E1) after 3,000 hrs of weathering. The two experimental formulations (E2 and E3) were sprayed to 40 thousandths of an inch in thickness and checked for porosity and resistance to sag. It was observed that the cured films did not sag and after sanding into the films for 120 seconds no porosity was observed.

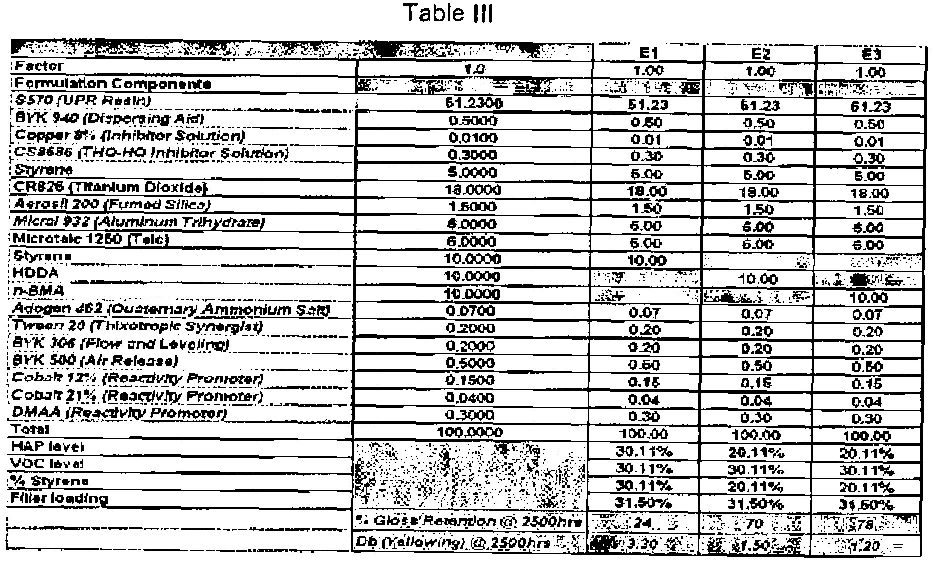

## Claims

1. A gelcoat composition comprising
- a base resin which is an unsaturated polyester resin;
- a reactive diluent component comprising styrene and one or more alternative reactive diluents; wherein the alternative reactive diluent comprises one or more linear or branched chained acrylic monomers selected from the group consisting of butyl acrylate, butyl methacrylate, hexyl acrylate, hexyl methacrylate, 2-ethylhexyl acrylate, 2-ethylhexyl methacrylate, lauryl acrylate, lauryl methacrylate, 1,4-butanediol diacrylate, 1,4-butanediol dimethacrylate, 1,6-hexanediol diacrylate, 1,6-hexanediol dimethacrylate, 1,12-dodecanediol dimethacrylate, polyethylene glycol diacrylate, polyethylene glycol dimethacrylate, polypropylene glycol diacrylate, polypropylene glycol dimethacrylate and combinations thereof;
- a pigment; and
- more than 2% by weight inorganic extended filler.

2. The gelcoat composition of Claim 1, further comprising one or more of promoters, accelerators, thixotropic agents, inhibitors, air release agents, flow and leveling agents and dispersing aids.

3. The gelcoat composition of Claim 1, wherein the inorganic extended filler is selected from the group consisting of chopped fiberglass, milled fiberglass, talc, silicon dioxide, titanium dioxide, wollastonite, mica, alumina trihydrate, clay, magnesium carbonate, calcium carbonate and combinations thereof.

4. The gelcoat composition of Claim 1, wherein the pigment is selected from the group consisting of titanium dioxide, carbon black, iron oxide black, phthalo blue, phthalo green, quinacridone magenta, LF orange, arylide red, quinacridine red, red oxide and combinations thereof.

5. The gelcoat composition of Claim 1, having a blush measured as DE of less than 2.20 after being submerged in water at 65 °C for 6 hours and then remaining in the water for 14 hours.

6. The gelcoat composition of Claim 1, having yellowing measured as Db of less than 3.15 after 2,500 hours of QUV accelerated weathering performed in accordance with ASTM standard G153.

7. The gelcoat composition of Claim 1, wherein the HAPS level is less than 30%.

8. The gelcoat composition of Claim 1, comprising more than 3% by weight inorganic extended filler.

9. A process for making a gel coat composition according to claim 1, wherein at least
- a base resin which is an unsaturated polyester resin,
- a reactive diluent component comprising styrene and one or more alternative reactive diluents; wherein the alternative reactive diluent comprises one or more linear or branched chained acrylic monomers selected from the group consisting of butyl acrylate, butyl methacrylate, hexyl acrylate, hexyl methacrylate, 2-ethylhexyl acrylate, 2-ethylhexyl methacrylate, lauryl acrylate, lauryl methacrylate, 1,4-butanediol diacrylate, 1,4-butanediol dimethacrylate, 1,6-hexanediol diacrylate, 1,6-hexanediol dimethacrylate, 1,12-dodecanediol dimethacrylate, polyethylene glycol diacrylate, polyethylene glycol dimethacrylate, polypropylene glycol diacrylate, polypropylene glycol dimethacrylate and combinations thereof;
- a pigment and
- more than 2% by weight inorganic extended filler
are combined.

10. A method of making a watercraft comprising the steps of applying the gelcoat composition of Claim 1 to an inner surface of a watercraft mold, at least partially curing the gelcoat composition, applying reinforcing material and laminating resin to the gelcoat composition within the mold to form a plastic support adjacent to the gelcoat and curing the plastic support within the mold to form a laminated fiber reinforced component comprising a fully cured gelcoat and a plastic support and demolding the laminated reinforced component.

11. The method of Claim 10, wherein the gelcoat is colored and has a blush measured as DE of less than 2.20 after being submerged in water at 65 °C for 6 hours and then remaining in the water for 14 hours.

12. The method of Claim 10, wherein the gelcoat is white and has yellowing measured as Db of less than 3.15 after being subjected to 2,500 hours of QUV accelerated weathering performed in accordance with ASTM standard G153.

## Patentansprüche

1. Eine Gelcoat-Zusammensetzung umfassend
- ein Basisharz, das ein ungesättigtes Polyesterharz ist;
- eine reaktionsfähige Verdünnungsmittelkomponente umfassend Styrol und ein oder mehrere alternative reaktionsfähige Verdünnungsmittel; wobei das alternative reaktionsfähige Verdünnungsmittel ein oder mehrere geradkettige oder verzweigte Acrylmonomere ausgewählt aus der Gruppe bestehend aus Butylacrylat, Butylmethacrylat, Hexylacrylat, Hexylmethacrylat, 2-Ethylhexylacrylat, 2-Ethylhexylmethacrylat, Laurylacrylat, Laurylmethacrylat, 1,4-Butandioldiacrylat, 1,4-Butandioldimethacrylat, 1,6-Hexandioldiacrylat, 1,6-Hexandioldimethacrylat, 1,12-Dodecandioldimethacrylat, Polyethylenglycoldiacrylat, Polyethylenglycoldimethacrylat, Polypropylenglycoldiacrylat, Polypropylenglycoldimethacrylat und deren Kombinationen umfasst;
- ein Pigment; und
- mehr als 2 Gew.-% anorganischen ausgedehnten Füllstoff.

2. Die Gelcoat-Zusammensetzung gemäß Anspruch 1, die weiterhin ein oder mehrere Promotoren, Beschleuniger, Thixotropiermittel, Inhibitoren, Luftfreisetzungsmittel, Fließ- und Verlaufmittel und Dispergiermittel umfasst.

3. Die Gelcoat-Zusammensetzung gemäß Anspruch 1, wobei der anorganische ausgedehnte Füllstoff ausgewählt wird aus der Gruppe bestehend aus zerkleinerter Glasfaser, gemahlener Glasfaser, Talk, Silica, Titandioxid, Wollastonit, Glimmer, Aluminiumtrihydrat, Ton, Magnesiumcarbonat, Calciumcarbonat und deren Kombinationen.

4. Die Gelcoat-Zusammensetzung gemäß Anspruch 1, wobei das Pigment ausgewählt wird aus der Gruppe bestehend aus Titandioxid, Ruß, Eisenoxidschwarz, Phthaloblau, Phthalogrün, Chinacridonmagenta, LF Orange, Arylidrot, Chinacridonrot, rotem Oxid und deren Kombinationen.

5. Die Gelcoat-Zusammensetzung gemäß Anspruch 1, die ein Anlaufen gemessen als DE von weniger als 2,20 aufweist, nachdem diese bei 65°C für 6 Stunden in Wasser eingetaucht wird und anschließend im Wasser für 14 Stunden verbleibt.

6. Die Gelcoat-Zusammensetzung gemäß Anspruch 1, die eine Vergilbung gemessen als Db von weniger als 3,15 nach 2 500 Stunden unter QUV-beschleunigter Bewitterung aufweist, die in Übereinstimmung mit ASTM-Standard G153 durchgeführt wird.

7. Die Gelcoat-Zusammensetzung gemäß Anspruch 1, wobei der HAPS-Anteil kleiner als 30% ist.

8. Die Gelcoat-Zusammensetzung gemäß Anspruch 1 umfassend mehr als 3 Gew.-% anorganischen ausgedehnten Füllstoff.

9. Ein Verfahren zur Herstellung einer Gelcoat-Zusammensetzung gemäß Anspruch 1, wobei wenigstens
- ein Basisharz, das ein ungesättigtes Polyesterharz ist;
- eine reaktionsfähige Verdünnungsmittelkomponente umfassend Styrol und ein oder mehrere alternative reaktionsfähige Verdünnungsmittel; wobei das alternative reaktionsfähige Verdünnungsmittel ein oder mehrere geradkettige oder verzweigte Acrylmonomere ausgewählt aus der Gruppe bestehend aus Butylacrylat, Butylmethacrylat, Hexylacrylat, Hexylmethacrylat, 2-Ethylhexylacrylat, 2-Ethylhexylmethacrylat, Laurylacrylat, Laurylmethacrylat, 1,4-Butandioldiacrylat, 1,4-Butandioldimethacrylat, 1,6-Hexandioldiacrylat, 1,6-Hexandioldimethacrylat, 1,12-Dodecandioldimethacrylat, Polyethylenglycoldiacrylat, Polyethylenglycoldimethacrylat, Polypropylenglycoldiacrylat, Polypropylenglycoldimethacrylat und deren Kombinationen umfasst;
- ein Pigment; und
- mehr als 2 Gew.-% anorganischen ausgedehnten Füllstoff
vermischt werden.

10. Ein Verfahren zur Herstellung eines Wasserfahrzeuges umfassend die Schritte aus Anbringen der Gelcoat-Zusammensetzung gemäß Anspruch 1 auf eine innere Oberfläche einer Wasserfahrzeugform, wenigstens teilweise Härten der Gelcoat-Zusammensetzung, Anbringen von Verstärkungsmaterial und Laminierharz auf die Gelcoat-Zusammensetzung innerhalb der Form, um eine Kunststoffunterlage angrenzend an den Gelcoat zu bilden; und Härten der Kunststoffunterlage innerhalb der Form, um eine laminierte Faser-verstärkte Komponente zu bilden, die einen vollständig ausgehärteten Gelcoat und eine Kunststoffunterlage umfasst; und Entformen der laminierten verstärkten Komponente.

11. Das Verfahren gemäß Anspruch 10, wobei der Gelcoat gefärbt ist und ein Anlaufen gemessen als DE von weniger als 2,20 aufweist, nachdem dieser in Wasser bei 65°C für 6 Stunden eingetaucht wird und anschließend in dem Wasser für 14 Stunden verbleibt.

12. Das Verfahren gemäß Anspruch 10, wobei der Gelcoat weiß ist und eine Vergilbung gemessen als Db von weniger als 3,15 aufweist, nachdem er für 2 500 Stunden QUV-beschleunigter Bewitterung ausgesetzt wird, die in Übereinstimmung mit ASTM-Standard G153 durchgeführt wird.

## Revendications

1. Composition d'enduit gélifié comprenant
- une résine de base qui est une résine de polyester insaturé ;
- un composant diluant réactif comprenant du styrène et un ou plusieurs diluants réactifs alternatifs; le diluant réactif alternatif comprenant un ou plusieurs monomères acryliques à chaîne linéaire ou ramifiée choisis dans le groupe constitué par l'acrylate de butyle, le méthacrylate de butyle, l'acrylate d'hexyle, le méthacrylate d'hexyle, l'acrylate de 2-éthylhexyle, le méthacrylate de 2-éthylhexyle, l'acrylate de lauryle, le méthacrylate de lauryle, le diacrylate de 1,4-butanediol, le diméthacrylate de 1,4-butanediol, le diacrylate de 1,6-hexanediol, le diméthacrylate de 1,6-hexanediol, le diméthacrylate de 1,12-dodécanediol, le diacrylate de polyéthylène glycol, le diméthacrylate de polyéthylène glycol, le diacrylate de polypropylène glycol, le diméthacrylate de polypropylène glycol et les combinaisons de ceux-ci ;
- un pigment ; et
- plus de 2 % en poids de charge inorganique diluée.

2. Composition d'enduit gélifié de la revendication 1, comprenant en outre un ou plusieurs éléments parmi les promoteurs, les accélérateurs, les agents thixotropes, les inhibiteurs, les agents de désaération, les agents d'écoulement et d'étalement et les adjuvants de dispersion.

3. Composition d'enduit gélifié de la revendication 1, dans laquelle la charge inorganique diluée est choisie dans le groupe constitué par la fibre de verre hachée, la fibre de verre broyée, le talc, le dioxyde de silicium, le dioxyde de titane, la wollastonite, le mica, l'alumine trihydratée, l'argile, le carbonate de magnésium, le carbonate de calcium et les combinaisons de ceux-ci.

4. Composition d'enduit gélifié de la revendication 1, dans laquelle le pigment est choisi dans le groupe constitué par le dioxyde de titane, le noir de carbone, le noir d'oxyde de fer, le bleu phtalo, le vert phtalo, le magenta de quinacridone, l'orange LF, le rouge d'arylide, le rouge de quinacridine, l'oxyde rouge et les combinaisons de ceux-ci.

5. Composition d'enduit gélifié de la revendication 1, présentant une opalescence mesurée comme le DE de moins de 2,20 après avoir été plongée dans de l'eau à 65 °C pendant 6 heures puis en restant dans l'eau pendant 14 heures.

6. Composition d'enduit gélifié de la revendication 1, ayant un jaunissement mesuré comme le Db de moins de 3,15 après 2500 heures de vieillissement climatique accéléré QUV effectué conformément à la norme ASTM G153.

7. Composition d'enduit gélifié de la revendication 1, dans laquelle le niveau de HAPS est inférieur à 30 %.

8. Composition d'enduit gélifié de la revendication 1, comprenant plus de 3 % en poids de charge inorganique diluée.

9. Procédé de préparation d'une composition d'enduit gélifié selon la revendication 1, dans lequel au moins
- une résine de base qui est une résine de polyester insaturé;
- un composant diluant réactif comprenant du styrène et un ou plusieurs diluants réactifs alternatifs; le diluant réactif alternatif comprenant un ou plusieurs monomères acryliques à chaîne linéaire ou ramifiée choisis dans le groupe constitué par l'acrylate de butyle, le méthacrylate de butyle, l'acrylate d'hexyle, le méthacrylate d'hexyle, l'acrylate de 2-éthylhexyle, le méthacrylate de 2-éthylhexyle, l'acrylate de lauryle, le méthacrylate de lauryle, le diacrylate de 1,4-butanediol, le diméthacrylate de 1,4-butanediol, le diacrylate de 1,6-hexanediol, le diméthacrylate de 1,6-hexanediol, le diméthacrylate de 1,12-dodécanediol, le diacrylate de polyéthylène glycol, le diméthacrylate de polyéthylène glycol, le diacrylate de polypropylène glycol, le diméthacrylate de polypropylène glycol et les combinaisons de ceux-ci ;
- un pigment ; et
- plus de 2 % en poids de charge inorganique diluée sont combinés.

10. Procédé de fabrication d'une embarcation comprenant les étapes consistant à appliquer la composition d'enduit gélifié de la revendication 1 à une surface intérieure d'un moule d'embarcation, durcir au moins partiellement la composition d'enduit gélifié, appliquer un matériau de renforcement et une résine de stratification à la composition d'enduit gélifié à l'intérieur du moule pour former un support en plastique adjacent à l'enduit gélifié et durcir le support en plastique à l'intérieur du moule pour former un composant stratifié renforcé de fibres comprenant un enduit gélifié totalement durci et un support en plastique et démouler le composant stratifié renforcé.

11. Procédé de la revendication 10, dans lequel l'enduit gélifié est coloré et présente une opalescence mesurée comme le DE de moins de 2,20 après avoir été plongé dans de l'eau à 65 °C pendant 6 heures puis en restant dans l'eau pendant 14 heures.

12. Procédé de la revendication 10, dans lequel l'enduit gélifié est blanc et présente un jaunissement mesuré comme le Db de moins de 3,15 après avoir été soumis à 2500 heures de vieillissement climatique accéléré QUV effectué conformément à la norme ASTM G153.
